# EUROPÄISCHE PATENTSCHRIFT

(11) **EP 2 951 538 B1**
(45) Veröffentlichungstag und Bekanntmachung des Hinweises auf die Patenterteilung: **18.11.2020**
(21) Anmeldenummer: 14701049.0
(22) Anmeldetag: 21.01.2014
(51) Int. Cl.: G01D 11/24, G01C 15/04

(54) **ROTATIONSLASER**
ROTARY LASER
LASER ROTATIF

(30) Priorität: 29.01.2013 DE 102013201419
(43) Veröffentlichungstag der Anmeldung: 09.12.2015
(73) Patentinhaber: Hilti Aktiengesellschaft, 9494 Schaan (LI)
(72) Erfinder: LUKIC, Sasha, CH-9470 Buchs (CH); LAMPERT, Patrick, CH-9493 Mauren (LI); GASNAKIS, Stelios, CH-8708 Männerdorf (CH); FELSBERGER, Franz, CH-7000 Chur (CH)
(74) Vertreter: Hilti Aktiengesellschaft Corporate Intellectual Property
(86) Internationale Anmeldenummer: PCT/EP2014/051109
(87) Internationale Veröffentlichungsnummer: WO 2014/118031

(56) Entgegenhaltungen:
- EP-A2- 2 400 204
- WO-A1-98/32472
- DE-U1-202006 014 576
- US-A1- 2004 064 959

## Beschreibung

### Technisches Gebiet

Die vorliegende Erfindung betrifft einen Rotationslaser mit einem Gerätegehäuse und einer Messeinrichtung gemäß dem Oberbegriff des Anspruchs 1.

### Stand der Technik

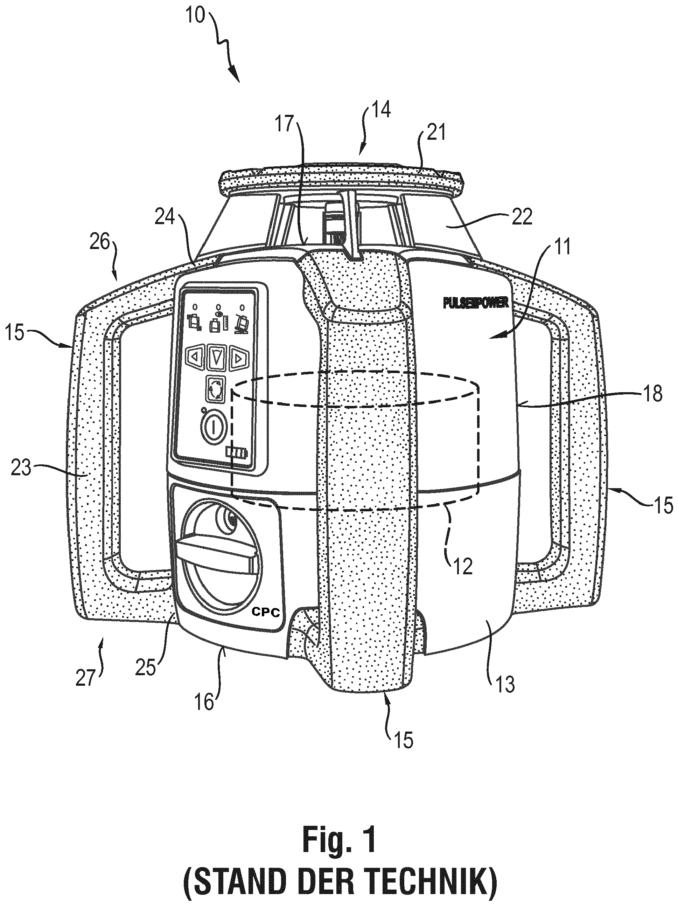

Bekannte Messgeräte umfassen ein Gerätegehäuse und eine Messeinrichtung, die innerhalb des Gerätegehäuses angeordnet ist. **FIG. 1** zeigt ein als Rotationslaser ausgebildetes bekanntes Messgerät **10** bestehend aus einem Gerätegehäuse **11** und einer im Gerätegehäuse 11 angeordneten Messeinrichtung **12,** die in FIG. 1 schematisch dargestellt ist. Das Gerätegehäuse 11 des Rotationslasers 10 weist ein Grundgehäuse **13,** einen Rotationskopf **14** und mehrere Handgriffe **15** auf. Das Grundgehäuse 13 ist im Wesentlichen zylinderförmig ausgebildet und umfasst eine Grundfläche **16,** eine der Grundfläche 16 gegenüber liegende Deckfläche **17** und eine die Grund- und Deckflächen 16, 17 verbindende Seitenfläche **18.** Der Rotationskopf 14 umfasst ein Deckelement **21,** das über mehrere, miteinander verbundene Querstege **22** mit der Deckfläche 17 des Grundgehäuses 13 verbunden ist. Die Handgriffe 15 umfassen ein Griffelement **23** sowie ein oberes Befestigungselement **24** und ein unteres Befestigungselement **25** zur Befestigung der Handgriffe 15 am Grundgehäuse 13. FIG. 1 zeigt eine Variante, bei der die Handgriffe 15 an einem oberen Ende **26** am Grundgehäuse 13 eingehängt und an einem unteren Ende **27** mit dem Grundgehäuse 13 verschraubt sind.

Die verschiedenen Gehäuseabschnitte des Gerätegehäuses 11, die als Grundgehäuse 13, Rotationskopf 14 und Handgriffe 15 ausgebildet sind, sind aus thermoplastischen Kunststoffen hergestellt und bestehen entweder aus einem harten thermoplastischen Kunststoff oder sind in einem Mehrkomponenten-Spritzgussverfahren aus einem harten, thermoplastischen und einem weichen thermoplastisch-elastomeren Kunststoff gefertigt. Das Deckelement des Rotationskopfes und die Handgriffe bestehen aus einem ersten und zweiten Material, die als harter, thermoplastischer und weicher thermoplastisch-elastomerer Kunststoff ausgebildet sind. Die bekannten Messgeräte weisen eine design- und materialbedingte mangelnde Robustheit bei Stürzen oder Stößen mit einer Fallhöhe über 1 m auf.

DE 20 2006 014 576 U1 offenbart eine Schutzeinrichtung für ein Messgerät, das ein Gerätegehäuse und eine Messeinrichtung, die zumindest teilweise im Gerätegehäuse angeordnet ist, umfasst. Die Schutzeinrichtung weist einen Kern aus einem thermoplastischen Material und eine Ummantelung aus einem gummi-elastischen Material auf. Als thermoplastisches Material für den Kern wird expandiertes Polypropylen (EEP) und als gummi-elastisches Material für die Ummantelung Kautschuk, ein thermoplastisches Elastomer-Material oder Ethylen-Propylen-Dien-Kautschuk (EPDM) vorgeschlagen. Der Kern sorgt durch die stossabsorbierenden Eigenschaften und das Rückstellverhalten von EEP für einen Stoßschutz und die Ummantelung verbessert die Abriebfestigkeit der Schutzeinrichtung und bietet einen Schutz gegen Eindringen von spitzen Gegenständen.

WO 1998 0032472 offenbart eine Schutzeinrichtung für ein elektrisches Gerät. Die Schutzeinrichtung umfasst zwei Ringelemente und drei Armelemente. Die Ringelemente bestehen aus einem festen Kern und einer Ummantelung; als Materialien werden für den Kern Edelstahl, Aluminium, Polyamide und PEEK und für die Ummantelung Kautschuk vorgeschlagen. Die Armelemente bestehen aus einer Röhre und einer Ummantelung; als Materialien werden für die Röhre Edelstahl, Aluminium, Polyamide und PEEK und für die Ummantelung Kautschuk vorgeschlagen.

### Darstellung der Erfindung

Die Aufgabe der vorliegenden Erfindung besteht in der Entwicklung eines robusten Gerätegehäuses für einen Rotationslaser mit einer im Gerätegehäuse angeordneten Messeinrichtung, wobei die Messeinrichtung bei Stößen oder Stürzen aus Fallhöhen über 1 m vor Beschädigung geschützt ist. Außerdem sollen neben der Messeinrichtung das Gerätegehäuse und am Gerätegehäuse angebrachte Gerätekomponenten geschützt werden.

Diese Aufgabe wird bei dem eingangs genannten Rotationslaser erfindungsgemäß durch die Merkmale des unabhängigen Anspruchs gelöst. Vorteilhafte Weiterbildungen sind in den abhängigen Ansprüchen angegeben.

Erfindungsgemäß weisen die ersten Teilbereiche der Handgriffe an einem, dem Rotationskopf abgewandten, unteren Ende der Handgriffe untere Stoßfangelemente auf, wobei die unteren Stoßfangelemente in einer axialen Richtung parallel zu einer Rotationsachse des Rotationslasers gegenüber der Grundfläche hervorstehen, und die ersten Teilbereiche der Handgriffe sind aus einem ersten Material aufgebaut, wobei das erste Material ein elastomerer oder thermoplastisch-elastomerer Kunststoff mit einer Rückprallelastizität kleiner als 40 % und einer Shore-A Härte kleiner als 80 ist und der Volumenanteil der ersten Teilbereiche mindestens 70 % beträgt. Durch die Ausbildung der unteren Stoßfangelemente am unteren Ende der Handgriffe trifft das Gerätegehäuse auf die unteren Stoßfangelemente, die die Stoßenergie aufnehmen und durch elastische Verformung abbauen. Die Grundfläche des Grundgehäuses ist bei einem Sturz oder Stoß durch die unteren Stoßfangelemente vor einer direkten Krafteinwirkung geschützt. Durch eine zusätzliche seitliche Ausbildung der unteren Stoßfangelemente kann die Seitenfläche des Grundgehäuses geschützt werden.

Die ersten Teilbereiche der Handgriffe sind aus einem ersten Material aufgebaut, wobei das erste Material ein elastomerer oder thermoplastisch-elastomerer Kunststoff mit einer Rückprallelastizität kleiner als 40 % und einer Shore-A Härte kleiner als 80 ist und der Volumenanteil der ersten Teilbereiche mindestens 70 % beträgt. Bei einem Rotationslaser mit drei oder mehr Handgriffen kann das Grundgehäuse durch die Handgriffe vor einer direkten Krafteinwirkung auf die Seitenfläche geschützt werden. Das Gerätegehäuse trifft bei einem Sturz oder Stoß auf die hervorstehenden Handgriffe, die die Stoßenergie aufnehmen und durch elastische Verformung abbauen können. Die Anzahl der Handgriffe und die Abmessungen der Handgriffe werden so aufeinander abgestimmt, dass die Seitenfläche des Grundgehäuses hinter der äußersten, tangentialen Verbindungsfläche zwischen benachbarten Handgriffen liegt. Die Eigenschaften des ersten Materials bestimmen den Anteil der Stoßenergie, den die Handgriffe durch elastische Verformung abbauen können. Je höher der durch elastische Verformung abgebaute Anteil der Stoßenergie ist, umso geringer ist die Energie, die auf die Messeinrichtung einwirken kann.

Kunststoffe werden nach ihrem mechanischen Verhalten unter Wärmeeinfluss in thermoplastische Kunststoffe (Thermoplaste), duroplastische Kunststoffe (Duroplaste) und elastomere Kunststoffe (Elastomere) unterteilt. Thermoplaste sind unvernetzte Kunststoffe, die wiederholt formbar sind, je besser, je mehr man sie erwärmt. Ob ein Thermoplast bei Raumtemperatur hart oder weich ist, hängt von seiner Glasübergangstemperatur ab, oberhalb der Glasübergangstemperatur ist er weich und verformbar, unterhalb fest und unformbar. Bekannte thermoplastische Kunststoffe sind beispielsweise Polyolefine (PE, PP), Styrolkunststoffe (PS, ABS, SAN), Polyester (PBT, PC), Polyacetale (POM) und Polyamide (PA). Das wichtigste Verfahren zur Formgebung von thermoplastischen Kunststoffen ist das Spritzgießen. Elastomere oder Gummiwerkstoffe sind formfeste, elastisch verformbare Kunststoffe, die sich bei Zug- und Druckbelastung elastisch verformen und danach in ihre ursprüngliche, unverformte Gestalt zurückkehren. Elastomere Kunststoffe sind Kautschuke (z.B. Naturkautschuk (NR), Nitril-Butadien-Kautschuk (NBR), Ethylen-Propylen-Dien-Kautschuk (EPDM), Silikon-Kautschuk (LSR, RTV)) und Polyurethan (PUR)-Elastomere. Polyurethan ist ein vielseitig einsetzbarer Kunststoff, bei dem durch eine geeignete Reaktionsführung und Auswahl der Monomere Polyurethane mit unterschiedlichen Vernetzungsgraden entstehen. Engmaschig vernetztes Polyurethan ist hart und zähelastisch und zählt zu den duroplastischen Kunststoffen. Weitmaschig vernetztes Polyurethan dagegen ist weich und gummielastisch und zählt zu den elastomeren Kunststoffen. Nicht vernetztes Polyurethan hat die Eigenschaften eines thermoplastischen Kunststoffes. Durch Schäumen hergestelltes Polyurethan wird aufgrund hervorragender mechanischer und physikalischer Eigenschaften als PUR-Hartschaum im Bauwesen, aber auch als dauer-elastischer PUR-Schaum für technische Anwendungen eingesetzt. Als eine Sondergruppe der Elastomere verbinden die thermoplastischen Elastomere (TPE), z.B. auf Olefin-Basis (TPE-O), auf Styrol-Basis (TPE-S) oder auf Urethan-Basis (TPE-U), die typischen Eigenschaften von Elastomeren mit den Verarbeitungsmöglichkeiten von Thermoplasten.

Die Rückprallelastizität (R) ist ein Kennwert von elastomeren Kunststoffen, der in der Norm DIN 53512 festgelegt ist und zur Beurteilung des Elastizitätsverhaltens bei einer Stoßbeanspruchung dient; für Kautschuk gilt die Norm ISO 4662. Zur Bestimmung der Rückprallelastizität schlägt ein definierter Pendelhammer auf einen Prüfkörper auf, das Arbeitsvermögen des Pendelhammers beträgt 0,5 J. Als Pendelhammer wird eine halbkugelförmige Hammerfinne mit einem Durchmesser von 15 mm verwendet. Die Rückprallelastizität wird aus der Auslenkung des Pendelhammers berechnet. Der Auslösewinkel beträgt 90° und die Länge des Pendelhammers 200 mm. Die Rückprallelastizität (R) wird berechnet aus dem Quotienten von Rückprallhöhe durch Anfangshöhe mal Hundert.

Die Shore-Härte ist ein Kennwert von elastomeren Kunststoffen, der in den Normen DIN 53505 und DIN 7868 festgelegt ist. Die Messverfahren unterscheiden sich für Weich-Elastomere und Zäh-Elastomere. Bei Weich-Elastomeren wird eine Shore-A Härte bestimmt und bei Zäh-Elastomeren eine Shore-D Härte. Die Shore-A Härte wird mit einer Nadel gemessen, die eine kegelstumpfförmige Spitze mit einer Stirnfläche von 0,79 mm Durchmesser und einem Öffnungswinkel von 35° aufweist; das Auflagegewicht beträgt 1 kg und die Haltezeit 15 s. Die Shore-D Härte wird mit einer Nadel gemessen, die eine kugelförmige Spitze mit einem Radius von 0,1 mm und einem Öffnungswinkel von 30° aufweist; das Auflagegewicht beträgt 5 kg und die Haltezeit 15 s. Üblicherweise wird für die Shore-Härte eine Genauigkeit von ± 5 Einheiten angenommen.

Die unteren Stoßfangelemente der Handgriffe weisen bevorzugt eine Standfläche zum Positionieren des Rotationslasers in einem horizontalen Laserbetrieb auf einem Untergrund auf. Da die unteren Stoßfangelemente gegenüber der Grundfläche des Grundgehäuses hervorstehen, eignet sich die normalerweise als Standfläche vorgesehene Grundfläche nicht als Standfläche für den Rotationslaser.

In einer bevorzugten Weiterentwicklung weisen die ersten Teilbereiche der Handgriffe an einem, dem Rotationskopf zugewandten, oberen Ende ein oberes Stoßfangelement auf. Durch die Ausbildung der oberen Stoßfangelemente am oberen Ende der Handgriffe können die Seitenfläche des Grundgehäuses und der Rotationskopf geschützt werden. Besonders wirkungsvoll ist die Schutzwirkung der oberen Stoßfangelemente im Zusammenwirken mit zusätzlichen Stoßfangelementen am Rotationskopf und mit den unteren Stoßfangelementen der Handgriffe. Eine seitliche Ausrichtung der oberen Stoßfangelemente schützt die Seitenfläche des Grundgehäuses, während eine zum Rotationskopf gerichtete Ausrichtung den Rotationskopf schützt. Dabei ist zu berücksichtigen, dass die Ausdehnung der oberen Stoßfangelemente zum Rotationskopf hin dadurch begrenzt ist, dass der um die Rotationsachse rotierende Laserstrahl durch die oberen Stoßfangelemente nicht unterbrochen werden soll.

Bevorzugt beträgt der Volumenanteil des ersten Materials im ersten Teilbereich der Handgriffe mindestens 50 %. Durch einen Volumenanteil des elastomeren oder thermoplastisch-elastomeren Kunststoffes von mindestens 50 % ist sichergestellt, dass die Stoßenergie auch für Fallhöhen grösser als 1 m vom Gerätegehäuse aufgenommen und nicht auf die Messeinrichtung übertragen wird, so dass die Messeinrichtung vor Beschädigungen geschützt ist.

In einer ersten Variante beträgt der Volumenanteil des ersten Materials in den ersten Teilbereichen der Handgriffe 100 %. Je höher der Volumenanteil des ersten Materials im ersten Teilbereich der Handgriffe ist, umso grösser ist der durch elastische Verformung abgebaute Anteil der Stoßenergie.

In einer zweiten, alternativen Variante sind die ersten Teilbereiche der Handgriffe aus einem weiteren Material aufgebaut, wobei das weitere Material vom ersten Material verschieden ist. Das weitere Material kann beispielsweise als elastomerer Kunststoff, als thermoplastisch-elastomerer Kunststoff, als thermoplastischer Kunststoff oder als metallischer Werkstoff aus gebildet sein. Die Auswahl des weiteren Materials in den ersten Teilbereichen der Handgriffe hängt von den Anforderungen an die Handgriffe ab.

Besonders bevorzugt weisen die ersten Teilbereiche der Handgriffe ein elastisch biegsames Einlegeelement, das aus dem weiteren Material aufgebaut ist, auf. In das Einlegeelement im ersten Teilbereich des Handgriffes können dämpfende, versteifende oder auch prozessbedingte Funktionen integriert sein. Die Auswahl des weiteren Materials und der Form des Einlegeelementes hängt von den Anforderungen an die Handgriffe ab.

Besonders bevorzugt weisen die Handgriffe einen zweiten Teilbereich aus einem zweiten Material mit mindestens einem Befestigungselement zur Befestigung der Handgriffe am Grundgehäuse auf, wobei das zweite Material ein harter, thermoplastischer Kunststoff oder ein metallischer Werkstoff ist. Das zweite Material wird in den Bereichen der Handgriffe eingesetzt, die an andere Gehäuseabschnitte angrenzen und mit diesen verbunden werden müssen. Das als harter, thermoplastischer Kunststoff oder als metallischer Werkstoff ausgebildete zweite Material ermöglicht eine gute Anbindung der Handgriffe an das Grundgehäuse. Dabei umfassen die zweiten Teilbereiche der Handgriffe besonders bevorzugt an einem, dem Rotationskopf zugewandten, oberen Ende ein oberes Befestigungselement und an einem, dem Rotationskopf abgewandten, unteren Ende ein unteres Befestigungselement zur Befestigung der Handgriffe am Grundgehäuse. Ein oberes und unteres Befestigungselement stellen bei einem Sturz oder Stoß eine dauerhafte Befestigung der Handgriffe am Grundgehäuse sicher.

Besonders bevorzugt weist der zweite Teilbereich im Verbindungsbereich zum ersten Teilbereich ein elastisch biegsames Verbindungselement auf. Das Verbindungselement vergrößert die Verbindungsfläche zwischen dem ersten und zweiten Teilbereich des Handgriffes. Je grösser die Verbindungsfläche ist, umso besser ist die Anbindung zwischen dem ersten und zweiten Teilbereich. Außerdem kann das Verbindungselement bei entsprechender Ausgestaltung wie ein Federelement wirken, das sich elastisch verformt und anschließend in die ursprüngliche Gestalt zurückkehrt.

In einer bevorzugten Weiterentwicklung umfasst der Rotationskopf einen als Deckelement ausgebildeten, ersten Teilbereich aus einem ersten Material und einen, mehrere Querstege umfassenden, zweiten Teilbereich aus einem zweiten Material, wobei das erste Material ein elastomerer oder thermoplastisch-elastomerer Kunststoff mit einer Rückprallelastizität kleiner als 40 % und einer Shore-A Härte kleiner als 80 ist und das zweite Material ein harter, thermoplastischer Kunststoff oder ein metallischer Werkstoff ist. Die Eigenschaften des ersten Materials sind im Hinblick auf einen hohen Energieabbau ausgewählt. Ein elastomerer oder thermoplastisch-elastomerer Kunststoff mit einer Rückprallelastizität kleiner als 40 % und einer Shore-A Härte kleiner als 80 schützt den Rotationskopf bei einem Stoß oder Sturz aus Fallhöhen grösser als 1 m vor Beschädigungen. Das zweite Material ermöglicht eine sichere Anbindung des Rotationskopfes an die umliegenden Gehäuseabschnitte des Gerätegehäuses.

Besonders bevorzugt beträgt der Volumenanteil des ersten Teilbereichs des Rotationskopfes mindestens 50 %. Der Volumenanteil des ersten Teilbereichs von mindestens 50 % im Rotationskopf sorgt dafür, dass die Stoßenergie für Fallhöhen grösser als 1 m bei einem Sturz auf den Rotationskopf vom Gerätegehäuse aufgenommen und abgebaut wird und nicht auf die Messeinrichtung übertragen wird.

Der Volumenanteil des ersten Materials im ersten Teilbereich des Rotationskopfes beträgt besonders bevorzugt mindestens 50 %. Durch einen Volumenanteil des elastomeren oder thermoplastisch-elastomeren Kunststoffes von mindestens 50 % ist sichergestellt, dass die Stoßenergie auch für Fallhöhen grösser als 1 m vom Rotationskopf aufgenommen und nicht auf die Messeinrichtung übertragen wird, so dass die Messeinrichtung vor Beschädigungen geschützt ist.

In einer ersten Variante beträgt der Volumenanteil des ersten Materials im ersten Teilbereich des Rotationskopfes 100 %. Je höher der Volumenanteil des ersten Materials im ersten Teilbereich des Rotationskopfes ist, umso grösser ist der durch elastische Verformung abgebaute Anteil der Stoßenergie.

In einer zweiten, alternativen Variante ist der erste Teilbereich des Rotationskopfes aus einem weiteren Material aufgebaut, wobei das weitere Material vom ersten Material verschieden ist. Das weitere Material kann beispielsweise als elastomerer Kunststoff, als thermoplastisch-elastomerer Kunststoff, als thermoplastischer Kunststoff oder als metallischer Werkstoff ausgebildet sein. Die Auswahl des weiteren Materials hängt von den Anforderungen an den Rotationskopf ab.

Besonders bevorzugt der erste Teilbereich des Rotationskopfes ein elastisch biegsames Einlegeelement, das zumindest teilweise aus dem weiteren Material aufgebaut ist, auf. In das Einlegeelement im ersten Teilbereich des Rotationskopfes können dämpfende, versteifende oder auch prozessbedingte Funktionen integriert sein. Die Auswahl des weiteren Materials und der Form des Einlegeelementes hängt von den Anforderungen an den Rotationskopf ab.

Der erste Teilbereich des Rotationskopfes umfasst besonders bevorzugt mindestens ein Stoßfangelement. Durch die Ausbildung von Stoßfangelementen am Deckelement trifft das Gerätegehäuse bei einem Sturz oder Stoß auf die Stoßfangelemente, die die Stoßenergie aufnehmen und durch elastische Verformung abbauen. Das Deckelement und die Querstege des Rotationskopfes sind bei einem Sturz oder Stoß durch die Stoßfangelemente vor einer direkten Krafteinwirkung geschützt. Besonders wirkungsvoll ist die Schutzwirkung der Stoßfangelemente am Rotationskopf im Zusammenwirken mit den oberen Stoßfangelementen der Handgriffe.

Eine seitliche Ausrichtung der oberen Stoßfangelemente der Handgriffe schützt die Seitenfläche des Grundgehäuses, während eine zum Rotationskopf gerichtete Ausrichtung den Rotationskopf schützt. Dabei ist zu berücksichtigen, dass die Ausdehnung der oberen Stoßfangelemente und der Stoßfangelemente am Rotationskopf dadurch begrenzt ist, dass der um die Rotationsachse rotierende Laserstrahl durch die Stoßfangelemente nicht unterbrochen werden soll.

Besonders bevorzugt entspricht die Anzahl der Stoßfangelemente des Rotationskopfes der Anzahl der Handgriffe. Dabei werden die Formen der Stoßfangelemente des Rotationskopfes und der oberen Stoßfangelemente der Handgriffe aufeinander abgestimmt, da die Schutzwirkung der Stoßfangelemente des Rotationskopfes im Zusammenwirken mit den oberen Stoßfangelementen der Handgriffe besonders wirkungsvoll ist.

In einer bevorzugten Ausführung weisen die ersten Teilbereiche der Handgriffe an einem, dem Rotationskopf zugewandten, oberen Ende ein oberes Stoßfangelement auf und der Rotationskopf weist mehrere Stoßfangelemente auf, wobei die Anzahl der Stoßfangelemente des Rotationskopfes der Anzahl der Handgriffe entspricht. Besonders wirkungsvoll sind Rotationslaser geschützt, wenn die Handgriffe jeweils untere und obere Stoßfangelemente aufweisen und der Rotationskopf ebenfalls mehrere Stoßfangelemente aufweist, wobei die Anzahl der Stoßfangelemente des Rotationskopfes der Anzahl der Handgriffe entspricht. Durch diese Ausgestaltung der Stoßfangelemente an den Handgriffen und am Rotationskopf kann das gesamte Grundgehäuse des Rotationslasers geschützt werden.

Die äußeren Oberflächen der Griffelemente und der Stoßfangelemente, die bei einem Sturz oder Stoß des Rotationslasers auf ein Hindernis oder einen Untergrund auftreffen, schließen besonders bevorzugt jeweils einen stumpfen Winkel zwischen 90° und 180° ein. Durch diese Ausgestaltung der äußeren Oberflächen kann der Rotationslaser bei einem Sturz oder Stoß auf dem Untergrund abrollen und dadurch einen Teil der Stoßenergie abbauen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

### Es zeigen:

- FIG. 1: ein als Rotationslaser ausgebildetes bekanntes Messgerät mit einem Gerätegehäuse bestehend aus einem Grundgehäuse, einem Rotationskopf und mehreren Handgriffen;
- FIG. 2: ein erfindungsgemäßes Messgerät in Form eines Rotationslasers mit einem Gerätegehäuse bestehend aus einem Grundgehäuse, einem Rotationskopf und mehreren Handgriffen, wobei der Rotationskopf und die Handgriffe mehrteilig aus einem elastomeren und einem thermoplastischen Kunststoff hergestellt sind;
- FIGN. 3A, B: den Aufbau der Handgriffe des Rotationslasers der FIG. 2 in einer dreidimensionalen Ansicht (FIG. 3A) und in einem Schnitt durch den Handgriff parallel zur Rotationsachse des Rotationslasers (FIG. 3B);
- FIG. 4: den Aufbau des Rotationskopfes des Rotationslasers der FIG. 2 in einer Ansicht von oben; und
- FIG. 5: eine alternative Ausführungsform der Handgriffe für den Rotationslaser der FIG. 2.

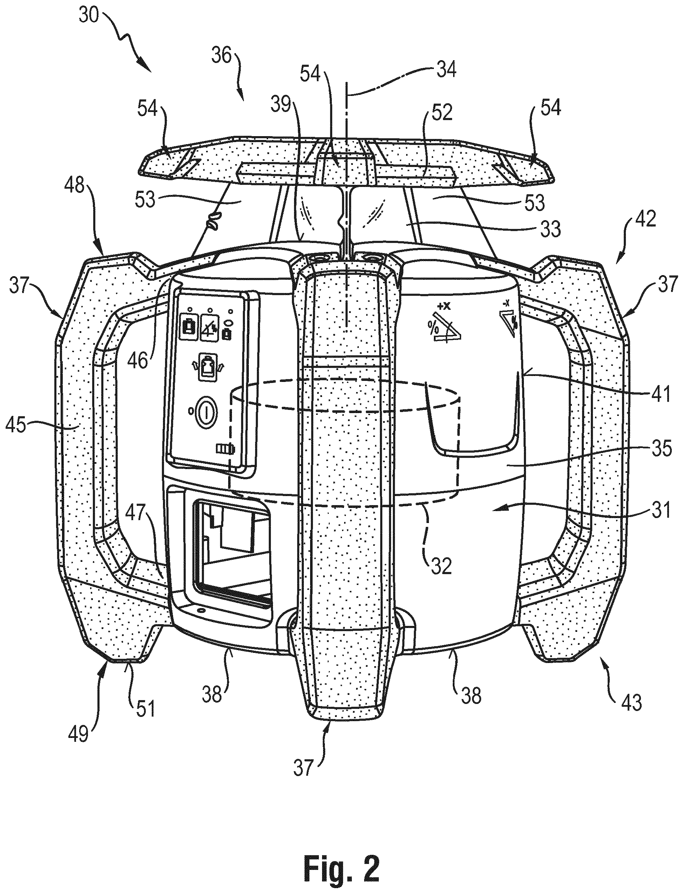

**FIG. 2** zeigt ein erfindungsgemäßes Messgerät **30,** das als Rotationslaser ausgebildet ist. Der Rotationslaser 30 umfasst ein Gerätegehäuse **31** und eine innerhalb des Gerätegehäuses 31 angeordnete Messeinrichtung **32,** die in FIG. 2 schematisch dargestellt ist. Die Messeinrichtung 32 erzeugt in einer Strahlquelle einen Laserstrahl, der auf eine rotierende Umlenkoptik **33** trifft. Der Laserstrahl tritt in einer axialen Richtung aus der Strahlquelle aus und wird von der Umlenkoptik 33 um 90° in eine radiale Richtung umgelenkt. Die Umlenkoptik 33 rotiert um eine Rotationsachse **34,** die parallel zur axialen Richtung des ausgesandten Laserstrahls verläuft.

Das Gerätegehäuse 31 des Rotationslasers 30 umfasst ein Grundgehäuse 35, einen Rotationskopf **36** und mehrere Handgriffe **37.** FIG. 2 zeigt ein Gerätegehäuse 31 mit vier identisch ausgebildeten Handgriffen 37, die gleichmäßig um das Grundgehäuse 35 herum angeordnet sind. Alternativ kann das Gerätegehäuse 31 einen, zwei, drei oder mehr als vier Handgriffe 37 aufweisen und/oder die Handgriffe können unterschiedlich ausgebildet sein. Bei einem Gerätegehäuse 31 mit mindestens drei Handgriffen 37 können die Handgriffe 37 mit einer Standfläche zum Positionieren des Rotationslasers 30 in einer stehenden Anordnung auf einem Untergrund versehen werden.

Das Grundgehäuse 35 besteht aus einer Grundfläche **38,** einer der Grundfläche 38 gegenüber liegenden Deckfläche **39** und einer die Grund- und Deckfläche 38, 39 verbindenden Seitenfläche **41.** Der Rotationskopf 36 ist an der Deckfläche 39 mit dem Grundgehäuse 35 verbunden und die Handgriffe 37 sind an einem, dem Rotationskopf 36 zugewandten, oberen Ende **42** und an einem, dem oberen Ende 42 abgewandten, unteren Ende **43** am Grundgehäuse 35 befestigt.

Der Handgriff 37 umfasst ein Griffelement **45** zum Fassen des Rotationslasers 30 sowie ein oberes Befestigungselement **46** und ein unteres Befestigungselement **47** zur Befestigung des Handgriffes 37 am Grundgehäuse 35. Der Handgriff 37 umfasst zusätzlich am oberen Ende 42 ein oberes Stoßfangelement **48** und am unteren Ende 43 ein unteres Stoßfangelement **49.** Die Stoßfangelemente 48, 49 verbessern die Energieaufnahme und den Energieabbau im Handgriff 37 bei einem Sturz oder Stoß. Die unteren Stoßfangelemente 49 weisen jeweils eine Standfläche **51** auf und der Rotationslaser 30 wird im horizontalen Laserbetrieb mittels der Standflächen 51 in einer stehenden Anordnung auf einem Untergrund positioniert. Durch die Ausbildung der unteren Stoßfangelemente 49 am unteren Ende 43 der Handgriffe 37 trifft das Gerätegehäuse 31 bei einem Sturz oder Stoß in Richtung der Grundfläche 38 auf die unteren Stoßfangelemente 49, die die Stoßenergie aufnehmen und abbauen. Die Grundfläche 38 des Grundgehäuses 35 ist bei einem Sturz oder Stoß durch die unteren Stoßfangelemente 49 vor einer direkten Krafteinwirkung geschützt.

Der Rotationskopf 36 schützt die Umlenkoptik 33 und umfasst ein Deckelement **52** und mehrere, miteinander verbundene Querstege **53,** die den Rotationskopf 36 an der Deckfläche 39 des Grundgehäuses 35 befestigen. Die Querstege 53 sind möglichst schmal ausgebildet, um den rotierenden Laserstrahl möglichst wenig zu unterbrechen. Am Deckelement 52 sind mehrere Stoßfangelemente **54** vorgesehen, die sowohl in axialer Richtung parallel zur Rotationsachse 34 als auch parallel zur Laserebene senkrecht zur Rotationsachse 34 gegenüber dem Deckelement 52 hervorstehen. Durch die Ausbildung der Stoßfangelemente 54 am Deckelement 52 trifft das Gerätegehäuse 31 bei einem Sturz oder Stoß auf die Stoßfangelemente 54, die die Stoßenergie aufnehmen und abbauen. Das Deckelement 52 und die Querstege 53 des Rotationskopfes 36 sind bei einem Sturz oder Stoß durch die Stoßfangelemente 54 vor einer zu großen direkten Krafteinwirkung geschützt.

Die Form der Griffelemente 45 und der Stoßfangelemente 48, 49, 54 ist im Hinblick auf einen hohen Energieabbau ausgewählt. Die Oberflächen der Griffelemente 45 und der Stoßfangelemente 48, 49, 54, die bei einem Sturz oder Stoß auf ein Hindernis oder einen Untergrund auftreffen, schließen jeweils einen stumpfen Winkel zwischen 90° und 180° ein. Durch diese Ausgestaltung der Oberflächen kann der Rotationslaser bei einem Sturz oder Stoß auf dem Untergrund abrollen und dadurch einen Teil der Stoßenergie abbauen. Zusätzlich sind die Griffelemente 45 und die Stoßfangelemente 48, 49, 54 aus einem elastischen, energieabsorbierenden, Kunststoff hergestellt und bauen zusätzlich Stoßenergie durch elastische Verformung ab.

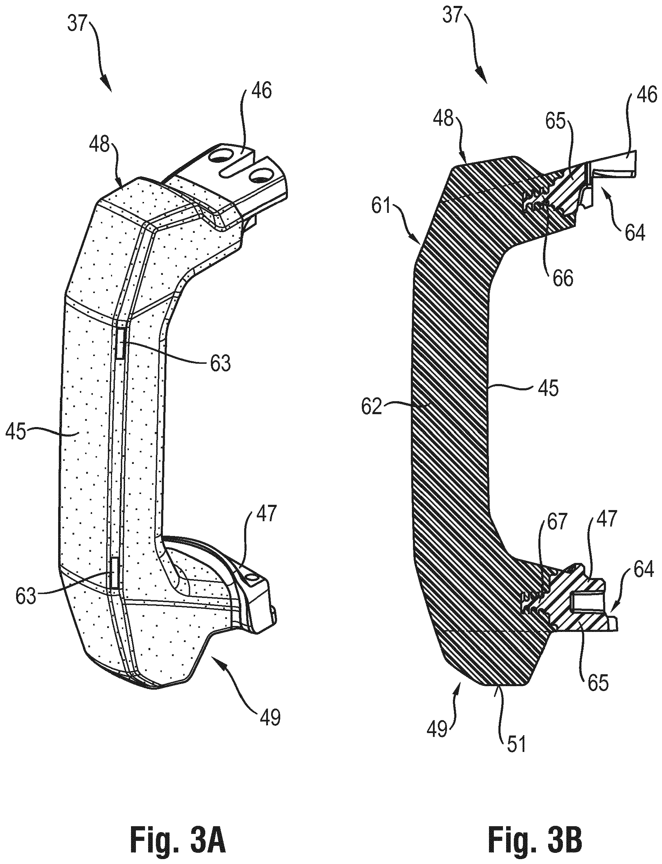

**FIGN. 3A****, B** zeigen den Aufbau der Handgriffe 37 des Rotationslasers 30 der FIG. 2 im Detail, wobei FIG. 3A den Handgriff 37 in einer dreidimensionalen Ansicht und FIG. 3B in einem Schnitt durch den Handgriff 37 parallel zur Rotationsachse 34 des Rotationslasers 30 in FIG. 2 zeigt.

Das Griffelement 45, das obere Stoßfangelement 48 und das untere Stoßfangelement 49 bilden einen ersten Teilbereich **61** des Handgriffes 37. Der erste Teilbereich 61 ist aus einem als elastomeren Kunststoff ausgebildeten ersten Material **62** mit einer Rückprallelastizität kleiner als 40 % und einer Shore-A Härte kleiner als 80 gefertigt. Die Eigenschaften des elastomeren Kunststoffs 62 für den ersten Teilbereich 61 sind zum einen im Hinblick auf einen hohen Energieabbau bei einem Sturz oder einem Stoß ausgewählt und zum anderen soll das Griffelement 45 eine ausreichende Stabilität aufweisen, um den Rotationslaser 30 an den Handgriffen 37 fassen zu können. Als elastomere Kunststoffe für den ersten Teilbereich eignen sich PUR-Elastomere, auch in geschäumter Form, Kautschuke und thermoplastische Elastomere. Am Griffelement 45 sind Auflageelemente **63** vorgesehen, mit denen der Rotationslaser 30 im vertikalen Laserbetrieb in einer liegenden Anordnung auf einem Untergrund positioniert werden kann.

Das obere und untere Befestigungselement 46, 47 bilden einen zweiten Teilbereich **64** des Handgriffes 37. Der zweite Teilbereich 64 ist aus einem als thermoplastischer Kunststoff ausgebildeten zweiten Material **65** gefertigt und beispielsweise in einem Spritzgussverfahren hergestellt. Die Herstellung des ersten Teilbereichs 61 mit dem Griffelement 45, den Stoßfangelementen 48, 49 und den Auflageelementen 63 sowie die Verbindung des ersten Teilbereichs 61 zum zweiten Teilbereich 64 mit dem oberen und unteren Befestigungselement 46, 47 erfolgen in einem Mehrkomponenten-Verfahren.

Die oberen und unteren Befestigungselemente 46, 47 weisen im Verbindungsbereich zum Griffelement 45 jeweils ein elastisch biegsames Verbindungselement **66, 67** auf, das die Verbindungsfläche zwischen dem ersten und zweiten Teilbereich 61, 64 vergrößert. Je grösser die Verbindungsfläche zwischen den Teilbereichen 61, 64 ist, umso besser ist die Anbindung. Außerdem wirkt das Verbindungselement 66, 67 wie ein Federelement, das sich elastisch verformt und anschließend in die ursprüngliche Gestalt zurückkehrt. Neben den in FIG. 3B gezeigten Verbindungselementen in Form einer Tannenbaumstruktur 66, 67 können sämtliche Formen verwendet werden, die die Verbindungsfläche vergrößern.

Das zweite Material 65 ist als thermoplastischer Kunststoff ausgebildet und wird in den Bereichen der Handgriffe 37 eingesetzt, die an andere Gehäuseabschnitte angrenzen und mit diesen verbunden werden müssen. Der harte, thermoplastische Kunststoff 65 ermöglicht eine gute Anbindung der Handgriffe 37 an das Grundgehäuse 35. Thermoplastische Kunststoffe weisen gegenüber elastomeren Kunststoffen den Vorteil auf, dass sie schweißbar sind und sich über Schraubverbindungen mit umliegenden Gehäuseabschnitten dauerhaft verbinden lassen.

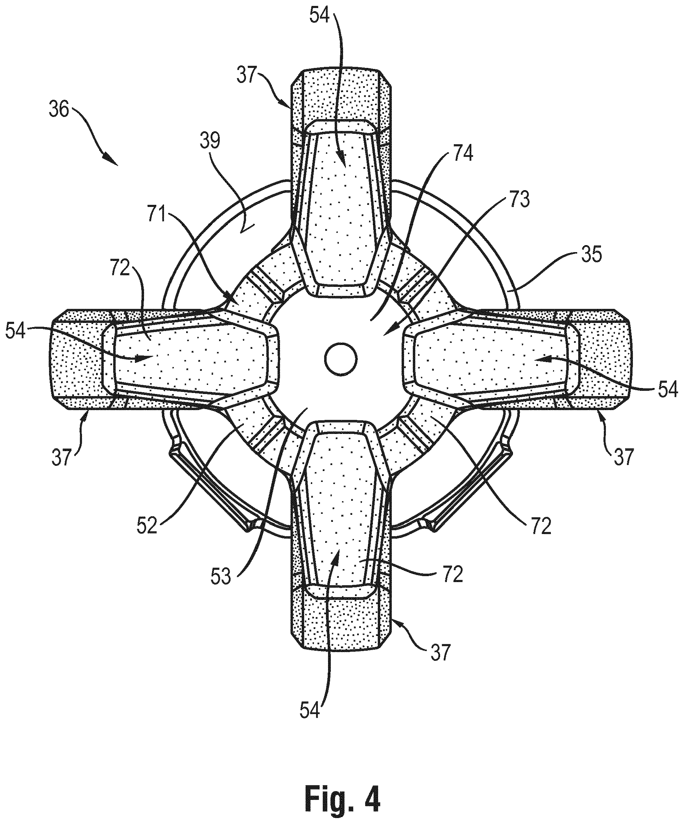

**FIG. 4** zeigt den Aufbau des Rotationskopfes 36 des Rotationslasers 30 der FIG. 2 im Detail in einer Ansicht von oben. Der Rotationskopf 36 besteht aus dem Deckelement 52, mehreren Querstegen 53 und mehreren Stoßfangelementen 54.

Das Deckelement 52 weist an einer der Umlenkoptik 33 abgewandten Oberseite die Stoßfangelemente 54 auf, die in axialer Richtung parallel zur Rotationsachse 34 und parallel zur Laserebene senkrecht zur Rotationsachse 34 gegenüber dem Deckelement 52 hervorstehen. Außerdem stehen die Stoßfangelemente 54 in der Laserebene senkrecht zur Rotationsachse 34 gegenüber dem Grundgehäuse 35 vor. Durch die Ausbildung der Stoßfangelemente 54 am Deckelement 52 trifft das Gerätegehäuse 31 bei einem Sturz oder Stoß auf die Stoßfangelemente 54, die die Stoßenergie aufnehmen und abbauen. Das Deckelement 52, die Querstege 53 und die Umlenkoptik 33 des Rotationskopfes 36 sind bei einem Sturz oder Stoß durch die Stoßfangelemente 54 vor einer zu großen direkten Krafteinwirkung geschützt. Das Deckelement 52 und die Stoßfangelemente 54 bilden einen ersten Teilbereich **71** des Rotationskopfes 36. Der erste Teilbereich 71 ist aus einem ersten Material **72,** das als elastomerer Kunststoff mit einer Rückprallelastizität kleiner als 40 % und einer Shore-A Härte kleiner als 80 ausgebildet ist, gefertigt. Die miteinander verbundenen Querstege 53 bilden einen zweiten Teilbereich **73** des Rotationskopfes 36. Der zweite Teilbereich 73 ist aus einem zweiten Material **74,** das als thermoplastischer Kunststoff ausgebildet ist, gefertigt.

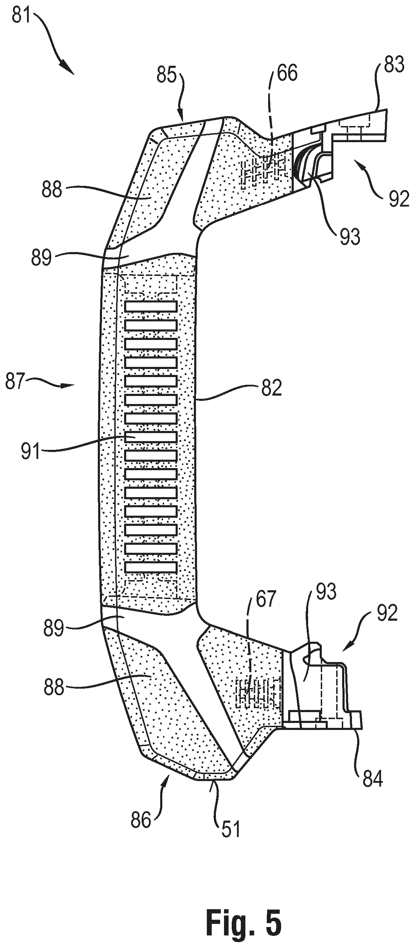

**FIG. 5** zeigt eine alternative Ausführungsform eines Handgriffes **81** für den Rotationslaser 30 der FIG. 2. Der Handgriff 81 ersetzt beim Rotationslaser 30 die Handgriffe 37. Der Handgriff 81 umfasst ein Griffelement **82,** ein oberes Befestigungselement **83,** ein unteres Befestigungselement **84,** ein oberes Stoßfangelement **85** und ein unteres Stoßfangelement **86.**

Das Griffelement 82, das obere Stoßfangelement 85 und das untere Stoßfangelement 86 bilden einen ersten Teilbereich **87** des Handgriffes 81. Der erste Teilbereich 87 ist aus einem ersten Material **88,** das als elastomerer Kunststoff mit einer Rückprallelastizität kleiner als 40 % und einer Shore-A Härte kleiner als 80 ausgebildet ist, und einem weiteren Material **89** hergestellt. Dabei besteht der erste Teilbereich 87 zu einem Volumenanteil von mindestens 50 % aus dem ersten Material 88. In das erste Material 88 ist ein Einlegeelement **91** eingebettet, das aus dem weiteren Material 89 besteht und zusätzliche dämpfende, versteifende oder auch prozessbedingte Funktionen haben kann. Das obere und untere Befestigungselement 83, 84 bilden einen zweiten Teilbereich **92,** der aus einem als thermoplastischer Kunststoff ausgebildeten zweiten Material **93** gefertigt ist. Der zweite Teilbereich 92 und das Einlegeelement 91 können aus dem gleichen thermoplastischen Kunststoff ausgebildet sein. Alternativ kann das weitere Material 89, aus dem das Einlegeelement 91 hergestellt ist, ein vom ersten Material 88 verschiedener, elastomerer Kunststoff oder ein vom zweiten Material 93 verschiedener, thermoplastischer Kunststoff sein.

FIG. 5 zeigt einen Handgriff 81, bei dem das Einlegeelement 91 teilweise an der Oberfläche des Handgriffes 81 sichtbar ist und als Designelement ausgestaltet werden kann, beispielsweise durch unterschiedliche Farben der Materialien 88, 89. Alternativ kann das Einlegeelement im Handgriff 81 angeordnet und vollständig von dem elastomeren Kunststoff 88 umgeben sein. Außerdem können das Einlegeelement im Griffelement und die Befestigungselemente einteilig hergestellt werden.

## Patentansprüche

1. Rotationslaser (30), aufweisend:
▪ ein Gerätegehäuse (31) mit einem Grundgehäuse (35), einem Rotationskopf (36) und drei oder mehr Handgriffen (37; 81), wobei das Grundgehäuse (35) eine Grundfläche (38), eine der Grundfläche (38) gegenüberliegende Deckfläche (39) und eine die Grund- und Deckflächen (38, 39) verbindende Seitenfläche (41) umfasst und die Handgriffe (37; 81) einen ersten Teilbereich (61; 87) mit einem Griffelement (45; 82), umfassen,
▪ eine Messeinrichtung (32), die zumindest teilweise innerhalb des Gerätegehäuses (31) angeordnet ist und die eine Strahlquelle und eine um eine Rotationsachse (34) rotierende Umlenkoptik (33) aufweist, wobei die Strahlquelle einen Laserstrahl erzeugt, der an der Umlenkoptik (33) umgelenkt wird und in einer Laserebene um die Rotationsachse (34) rotiert,
**dadurch gekennzeichnet, dass** die ersten Teilbereiche (61; 87) der Handgriffe (37; 81) an einem, dem Rotationskopf (36) abgewandten, unteren Ende (43) der Handgriffe (37; 81) untere Stoßfangelemente (49; 86) und an einem, dem Rotationskopf (36) zugewandten, oberen Ende (42) der Handgriffe (37; 81) obere Stoßfangelemente (48; 85) aufweisen, wobei die unteren Stoßfangelemente (49; 86) in einer axialen Richtung parallel zur Rotationsachse (34) gegenüber der Grundfläche (38) hervorstehen und die oberen Stoßfangelemente (48; 85) in der axialen Richtung parallel zur Rotationsachse (34) unterhalb der Laserebene angeordnet sind.

2. Rotationslaser nach Anspruch 1, **dadurch gekennzeichnet, dass** die unteren Stoßfangelemente (49; 86) eine Standfläche (51) zum Positionieren des Rotationslasers (30) in einem horizontalen Laserbetrieb auf einem Untergrund aufweisen.

3. Rotationslaser nach einem der Ansprüche 1 bis 2, **dadurch gekennzeichnet, dass** die ersten Teilbereiche (61; 87) der Handgriffe (37; 81) aus einem ersten Material (62; 88) aufgebaut sind, wobei das erste Material (62; 88) ein elastomerer oder thermoplastisch-elastomerer Kunststoff mit einer Rückprallelastizität kleiner als 40 % und einer Shore-A Härte kleiner als 80 ist und der Volumenanteil der ersten Teilbereiche (61; 87) mindestens 70 % beträgt.

4. Rotationslaser nach Anspruch 3, **dadurch gekennzeichnet, dass** der Volumenanteil des ersten Materials (62; 88) in den ersten Teilbereichen (61; 87) der Handgriffe (37; 81) mindestens 50 % beträgt.

5. Rotationslaser nach Anspruch 4, **dadurch gekennzeichnet, dass** der Volumenanteil des ersten Materials (62) in den ersten Teilbereichen (61) der Handgriffe (37) 100 % beträgt.

6. Rotationslaser nach Anspruch 4, **dadurch gekennzeichnet, dass** die ersten Teilbereiche (87) der Handgriffe (81) aus einem weiteren Material (89) aufgebaut sind, wobei das weitere Material (89) vom ersten Material (88) verschieden ist.

7. Rotationslaser nach Anspruch 6, **dadurch gekennzeichnet, dass** die ersten Teilbereiche (87) der Handgriffe (81) ein elastisch biegsames Einlegeelement (91), das aus dem weiteren Material (89) aufgebaut ist, aufweisen.

8. Rotationslaser nach einem der Ansprüche 3 bis 7, **dadurch gekennzeichnet, dass** die Handgriffe (37; 81) einen zweiten Teilbereich (64; 92) aus einem zweiten Material (65; 93) mit mindestens einem Befestigungselement (46, 47; 83, 84) zur Befestigung der Handgriffe (37; 81) am Grundgehäuse (35) aufweisen, wobei das zweite Material ein harter, thermoplastischer Kunststoff (65; 93) oder ein metallischer Werkstoff ist.

9. Rotationslaser nach Anspruch 8, **dadurch gekennzeichnet, dass** der zweite Teilbereich (64; 92) im Verbindungsbereich zum ersten Teilbereich (61; 87) ein elastisch biegsames Verbindungselement (66, 67) aufweist.

10. Rotationslaser nach einem der Ansprüche 1 bis 9, **dadurch gekennzeichnet, dass** der Rotationskopf (36) einen als Deckelement (52) ausgebildeten ersten Teilbereich (71) aus einem ersten Material (72) und einen, mehrere Querstege (53) umfassenden, zweiten Teilbereich (73) aus einem zweiten Material (74) umfasst, wobei das erste Material (72) ein elastomerer oder thermoplastisch-elastomerer Kunststoff mit einer Rückprallelastizität kleiner als 40 % und einer Shore-A Härte kleiner als 80 ist und das zweite Material (74) ein harter, thermoplastischer Kunststoff oder ein metallischer Werkstoff ist.

11. Rotationslaser nach Anspruch 10, **dadurch gekennzeichnet, dass** der Volumenanteil des ersten Teilbereichs (71) des Rotationskopfes (36) mindestens 50 % beträgt.

12. Rotationslaser nach Anspruch 11, **dadurch gekennzeichnet, dass** der Volumenanteil des ersten Materials (72) im ersten Teilbereich (71) des Rotationskopfes (36) mindestens 50 % beträgt.

13. Rotationslaser nach Anspruch 12, **dadurch gekennzeichnet, dass** der Volumenanteil des ersten Materials (72) im ersten Teilbereich (71) des Rotationskopfes (36) 100 % beträgt.

14. Rotationslaser nach Anspruch 12, **dadurch gekennzeichnet, dass** der erste Teilbereich (71) des Rotationskopfes (36) aus einem weiteren Material aufgebaut ist, wobei das weitere Material vom ersten Material (72) verschieden ist.

15. Rotationslaser nach Anspruch 14, **dadurch gekennzeichnet, dass** der erste Teilbereich (71) des Rotationskopfes (36) ein elastisch biegsames Einlegeelement, das zumindest teilweise aus dem weiteren Material aufgebaut ist, aufweist.

16. Rotationslaser nach einem der Ansprüche 10 bis 15, **dadurch gekennzeichnet, dass** der erste Teilbereich (71) des Rotationskopfes (36) mindestens ein Stoßfangelement (54) umfasst.

17. Rotationslaser nach Anspruch 16, **dadurch gekennzeichnet, dass** die Anzahl der Stoßfangelemente (54) des Rotationskopfes (36) der Anzahl der Handgriffe (37; 81) entspricht.

18. Rotationslaser nach Anspruch 1, **dadurch gekennzeichnet, dass** die ersten Teilbereiche (61; 87) der Handgriffe (37; 81) an einem, dem Rotationskopf (36) zugewandten, oberen Ende (42) ein oberes Stoßfangelement (48; 85) aufweisen und der Rotationskopf (36) mehrere Stoßfangelemente (54) aufweist, wobei die Anzahl der Stoßfangelemente (54) des Rotationskopfes (36) der Anzahl der Handgriffe (37; 81) entspricht.

19. Rotationslaser nach einem der Ansprüche 16 bis 18, **dadurch gekennzeichnet, dass** die äußeren Oberflächen der Griffelemente (45; 82) und der Stoßfangelemente (48, 49, 54; 85, 86) jeweils einen stumpfen Winkel zwischen 90° und 180° einschließen.

## Claims

1. Rotary laser (30), having:
▪ a device housing (31) with a base housing (35), a rotary head (36) and three or more handles (37; 81), the base housing (35) comprising a bottom surface (38), a top surface (39) opposite from the bottom surface (38) and a side surface (41) connecting the bottom and top surfaces (38, 39), and the handles (37; 81) comprising a first sub-region (61; 87) with a handle element (45; 82),
▪ a measuring unit (32), which is arranged at least partially inside the device housing (31) and which has a radiation source and an optical deflector (33) rotating about an axis of rotation (34), the radiation source producing a laser beam that is deflected at the optical deflector (33) and rotates about the axis of rotation (34) in a laser plane,
**characterized in that** the first sub-regions (61; 87) of the handles (37; 81) have lower shock absorbing elements (49; 86) at a lower end (43) of the handles (37; 81) facing away from the rotary head (36) and upper shock absorbing elements (48; 85) at an upper end (42) of the handles (37; 81) facing the rotary head (36), the lower shock absorbing elements (49; 86) projecting relative to the bottom surface (38) in an axial direction parallel to the axis of rotation (34) and the upper shock absorbing elements (48; 85) being arranged in the axial direction parallel to the axis of rotation (34) below the laser plane.

2. Rotary laser according to Claim 1, **characterized in that** the lower shock absorbing elements (49; 86) have a standing area (51) for positioning the rotary laser (30) on a base in a horizontal laser operating mode.

3. Rotary laser according to either of Claims 1 and 2, **characterized in that** the first sub-regions (61; 87) of the handles (37; 81) are made of a first material (62; 88), the first material (62; 88) being an elastomeric or thermoplastic-elastomeric material with a rebound elasticity of less than 40% and a Shore A hardness of less than 80 and the proportion by volume taken up by the first subregions (61; 87) being at least 70%.

4. Rotary laser according to Claim 3, **characterized in that** the proportion by volume of the first material (62; 88) in the first sub-regions (61; 87) of the handles (37; 81) is at least 50%.

5. Rotary laser according to Claim 4, **characterized in that** the proportion by volume of the first material (62) in the first sub-regions (61) of the handles (37) is 100%.

6. Rotary laser according to Claim 4, **characterized in that** the first sub-regions (87) of the handles (81) are made of a further material (89), the further material (89) being different from the first material (88).

7. Rotary laser according to Claim 6, **characterized in that** the first sub-regions (87) of the handles (81) have an elastically flexible insert element (91), which is made of the further material (89).

8. Rotary laser according to one of Claims 3 to 7, **characterized in that** the handles (37; 81) have a second sub-region (64; 82) of a second material (65; 93) with at least one fastening element (46, 47; 83, 84) for fastening the handles (37; 81) to the base housing (35), the second material being a hard, thermoplastic material (65; 93) or a metallic material.

9. Rotary laser according to Claim 8, **characterized in that** the second sub-region (64; 92) has in the connecting region with respect to the first sub-region (62; 87) an elastically flexible connecting element (66, 67).

10. Rotary laser according to one of Claims 1 to 9, **characterized in that** the rotary head (36) comprises a first sub-region (71) of a first material (72), formed as a top element (52), and a second sub-region (73) of a second material (74), comprising multiple transverse webs (53), the first material (72) being an elastomeric or thermoplastic-elastomeric material with a rebound elasticity of less than 40% and a Shore A hardness of less than 80 and the second material (74) being a hard, thermoplastic material or a metallic material.

11. Rotary laser according to Claim 10, **characterized in that** the proportion by volume of the first sub-region (71) of the rotary head (36) is at least 50%.

12. Rotary laser according to Claim 11, **characterized in that** the proportion by volume of the first material (72) in the first sub-region (71) of the rotary head (36) is at least 50%.

13. Rotary laser according to Claim 12, **characterized in that** the proportion by volume of the first material (72) in the first sub-region (71) of the rotary head (36) is 100%.

14. Rotary laser according to Claim 12, **characterized in that** the first sub-region (71) of the rotary head (36) is made of a further material, the further material being different from the first material (72).

15. Rotary laser according to Claim 14, **characterized in that** the first sub-region (71) of the rotary head (36) has an elastically flexible insert element, which is at least partially made of the further material.

16. Rotary laser according to one of Claims 10 to 15, **characterized in that** the first sub-region (71) of the rotary head (36) comprises at least one shock absorbing element (54).

17. Rotary laser according to Claim 16, **characterized in that** the number of shock absorbing elements (54) of the rotary head (36) corresponds to the number of handles (37; 81).

18. Rotary laser according to Claim 1, **characterized in that** the first sub-regions (61; 87) of the handles (37; 81) have an upper shock absorbing element (48; 85) at an upper end (42) facing the rotary head (36) and the rotary head (36) has multiple shock absorbing elements (54), the number of shock absorbing elements (54) of the rotary head (36) corresponding to the number of handles (37; 81).

19. Rotary laser according to Claims 16 to 18, **characterized in that** the outer surfaces of the handle elements (45; 82) and of the shock absorbing elements (48, 49, 54; 85, 86) in each case enclose an obtuse angle of between 90° and 180°.

## Revendications

1. Laser rotatif (30), présentant :
• un boîtier d'appareil (31) doté d'un boîtier de base (35), d'une tête rotative (36) et d'au moins trois poignées (37; 81), le boîtier de base (35) comprenant une surface de base (38), une surface de recouvrement (39) à l'opposé de la surface de base (38) et une surface latérale (41) reliant les surfaces de base et de recouvrement (38, 39), et les poignées (37; 81) comprenant une première zone partielle (61 ; 87) dotée d'un élément de préhension (45 ; 82),
• un dispositif de mesure (32) qui est disposé au moins en partie à l'intérieur du boîtier d'appareil (31) et qui présente une source de rayonnement et un système optique de déviation (33) tournant autour d'un axe de rotation (34), la source de rayonnement produisant un rayon laser qui est dévié au niveau du système optique de déviation (33) et tourne autour de l'axe de rotation (34) sur un niveau du laser,
**caractérisé en ce que** les premières zones partielles (61 ; 87) des poignées (37 ; 81) présentent à une extrémité inférieure (43), détournée de la tête rotative (36), des poignées (37 ; 81) des éléments absorbeurs de chocs inférieurs (49 ; 86) et à une extrémité supérieure (42), détournée de la tête rotative (36), des poignées (37 ; 81) des éléments absorbeurs de chocs supérieurs (48 ; 85), les éléments absorbeurs de chocs inférieurs (49 ; 86) faisant saillie dans une direction axiale en parallèle à l'axe de rotation (34) à l'opposé de la surface de base (38) et les éléments absorbeurs de chocs supérieurs (48 ; 85) étant disposés dans la direction axiale en parallèle à l'axe de rotation (34) au-dessous du niveau du laser.

2. Laser rotatif selon la revendication 1, **caractérisé en ce que** les éléments absorbeurs de chocs inférieurs (49 ; 86) présentent une surface de pose (51) pour positionner le laser rotatif (30) sur un sol lors d'un fonctionnement de laser horizontal.

3. Laser rotatif selon l'une quelconque des revendications 1 à 2, **caractérisé en ce que** les premières zones partielles (61 ; 87) des poignées (37; 81) sont composées d'un premier matériau (62 ; 88), le premier matériau (62 ; 88) étant une matière plastique élastomère ou élastomère thermoplastique ayant une élasticité de rebondissement inférieure à 40 % et une dureté Shore A inférieure à 80, et la part de volume des premières zones partielles (61 ; 87) s'élève à au moins 70 %.

4. Laser rotatif selon la revendication 3, **caractérisé en ce que** la part de volume du premier matériau (62 ; 88) dans les premières zones partielles (61 ; 87) des poignées (37 ; 81) s'élève à au moins 50 %.

5. Laser rotatif selon la revendication 4, **caractérisé en ce que** la part de volume du premier matériau (62) dans les premières zones partielles (61) des poignées (37) s'élève à 100 %.

6. Laser rotatif selon la revendication 4, **caractérisé en ce que** les premières zones partielles (87) des poignées (81) sont composées d'un matériau supplémentaire (89), le matériau supplémentaire (89) étant différent du premier matériau (88).

7. Laser rotatif selon la revendication 6, **caractérisé en ce que** les premières zones partielles (87) des poignées (81) présentent un élément d'insertion (91) élastiquement flexible composé du matériau supplémentaire (89).

8. Laser rotatif selon l'une quelconque des revendications 3 à 7, **caractérisé en ce que** les poignées (37; 81) présentent une deuxième zone partielle (64 ; 92) d'un deuxième matériau (65 ; 93) avec au moins un élément de fixation (46, 47 ; 83, 84) pour fixer les poignées (37; 81) au boîtier de base (35), le deuxième matériau étant une matière plastique thermoplastique dure (65 ; 93) ou un matériau métallique.

9. Laser rotatif selon la revendication 8, **caractérisé en ce que** la deuxième zone partielle (64 ; 92) présente un élément de liaison élastiquement flexible (66, 67) dans la zone de liaison avec la première zone partielle (61 ; 87).

10. Laser rotatif selon l'une quelconque des revendications 1 à 9, **caractérisé en ce que** la tête de rotation (36) comprend une première zone partielle (71), réalisée sous la forme d'un élément de recouvrement (52) d'un premier matériau (72), et une deuxième zone partielle (73) comprenant plusieurs traverses (53) d'un deuxième matériau (74), le premier matériau (72) étant une matière plastique élastomère ou élastomère thermoplastique ayant une élasticité de rebondissement inférieure à 40% et une dureté Shore A inférieure à 80, et le deuxième matériau (74) étant une matière plastique thermoplastique dure ou un matériau métallique.

11. Laser rotatif selon la revendication 10, **caractérisé en ce que** la part de volume de la première zone partielle (71) de la tête rotative (36) s'élève à au moins 50 %.

12. Laser rotatif selon la revendication 11, **caractérisé en ce que** la part de volume du premier matériau (72) dans la première zone partielle (71) de la tête rotative (36) s'élève à au moins 50 %.

13. Laser rotatif selon la revendication 12, **caractérisé en ce que** la part de volume du premier matériau (72) dans la première zone partielle (71) de la tête rotative (36) s'élève à 100 %.

14. Laser rotatif selon la revendication 12, **caractérisé en ce que** la première zone partielle (71) de la tête rotative (36) est composée d'un matériau supplémentaire, le matériau supplémentaire étant différent du premier matériau (72).

15. Laser rotatif selon la revendication 14, **caractérisé en ce que** la première zone partielle (71) de la tête rotative (36) présente un élément d'insertion élastiquement flexible qui est composé au moins en partie du matériau supplémentaire.

16. Laser rotatif selon l'une quelconque des revendications 10 à 15, **caractérisé en ce que** la première zone partielle (71) de la tête rotative (36) comprend au moins un élément absorbeur de chocs (54).

17. Laser rotatif selon la revendication 16, **caractérisé en ce que** le nombre des éléments absorbeurs de chocs (54) de la tête rotative (36) correspond au nombre des poignées (37 ; 81).

18. Laser rotatif selon la revendication 1, **caractérisé en ce que** les premières zones partielles (61 ; 87) des poignées (37; 81) présentent à une extrémité supérieure (42), tournée vers la tête rotative (36), un élément absorbeur de chocs supérieur (48 ; 85) et la tête rotative (36) présente plusieurs éléments absorbeurs de chocs (54), le nombre des éléments absorbeurs de chocs (54) de la tête rotative (36) correspondant au nombre des poignées (37; 81).

19. Laser rotatif selon l'une quelconque des revendications 16 à 18, **caractérisé en ce que** les surfaces extérieures des éléments de poignée (45 ; 82) et des éléments absorbeurs de chocs (48, 49, 54 ; 85, 86) forment respectivement un angle obtus compris entre 90° et 180°.
